# EUROPÄISCHE PATENTSCHRIFT

(11) **EP 1 246 043 B1**
(45) Veröffentlichungstag und Bekanntmachung des Hinweises auf die Patenterteilung: **29.10.2008**
(21) Anmeldenummer: 02100294.4
(22) Anmeldetag: 26.03.2002
(51) Int. Cl.: G06F 1/00

(54) **Verfahren zur Übertragung von Daten über einen Datenbus**
Method for transferring data over a data bus
Procédé de transfert de données sur un bus de données

(30) Priorität: 27.03.2001 DE 10115118
(43) Veröffentlichungstag der Anmeldung: 02.10.2002
(73) Patentinhaber: NXP B.V., 5656 AG Eindhoven (NL)
(72) Erfinder: Malzahn, Ralf, 52066, Aachen (DE)
(74) Vertreter: Volmer, Georg

(56) Entgegenhaltungen:
- EP-A- 1 093 056
- US-A- 5 095 525
- US-A- 5 239 634
- US-A- 5 892 826
- US-A- 5 933 854

## Beschreibung

### Technisches Gebiet

Die Erfindung betrifft ein Verfahren zur Übertragung von Daten über einen Datenbus zwischen einer Verarbeitungseinheit und einer Speichereinheit mit mehreren Speicherzellen, wobei die Verarbeitungseinheit über einen Adressbus die logische Adresse einer Speicherzelle übermittelt, auf welche zugegriffen werden soll. Ferner betrifft die Erfindung ein Datenübertragungssystem, welches zur Durchführung des genannten Verfahrens eingerichtet ist.

### Stand der Technik

Für den Austausch von digitalen Daten zwischen elektronischen Datenverarbeitungseinheiten ist es bekannt, Bussysteme zu verwenden. Bussysteme verbinden eine oder mehrere "zentrale" Verarbeitungseinheiten mit typischerweise mehreren peripheren Bauelementen beziehungsweise Hilfseinheiten. Der Bus enthält dabei den Adressbus mit den Adressleitungen, über welche diejenige der am Busbefindlichen Einheiten ausgewählt werden kann, mit welcher Daten ausgetauscht werden sollen, sowie den Datenbus mit den Datenleitungen, an welchen die auszutauschenden binären Daten anliegen. Darüber hinaus sind in der Regel Steuerleitungen eines Steuerbusses vorhanden, über welche das Schreiben und Lesen der Daten koordiniert wird Im häufigsten Falle wird die Verarbeitungseinheit auf der einen Seite des Bussystems durch einen Zentralprozessor (CPU) gebildet, während auf der anderen Seite des Busses Speicher, Ein-/Ausgabe-Komponenten oder ähnliche Einheiten liegen. Solche Einheiten werden nachfolgend vereinheitlicht als "Speichereinheiten" bezeichnet, wobei die Speichereinheiten ihrerseits mehrere einzelne "Speicherzellen" für jeweils ein Datum aufweisen können.
Bei den bekannten Bussystemen besteht eine bijektive Zuordnung zwischen den über den Bus ansprechbaren Speicherzellen und den logischen Adressen, über welche diese Speicherzellen ausgewählt werden können. Für einen Schreib-/Lesezugriff auf eine bestimmte Speicherzelle muss die Verarbeitungseinheit daher genau die eine zur Speicherzelle gehörige, eindeutige logische Adresse an den Adressbus anlegen, woraufhin die Verbindung zu der gewünschten Speicherzelle hergestellt wird und die Daten über den Datenbus ausgetauscht werden können. Es gibt somit nur eine genau definierte Adresse im Adressraum der Verarbeitungseinheit, unter welcher die Speicherzelle angesprochen werden kann. Die Daten gehen bei dem Datenaustausch zwischen der Speicherzelle und der Verarbeitungseinheit unverändert, das heißt im "Klartext" über den Datenbus.

Nachteilig bei den bekannten Verfahren zum Datenaustausch über ein Bussystem ist, dass es einen Angriffspunkt für das missbräuchliche Abhören geheimer Daten bietet. Dies hat seinen Grund darin, dass die zu übertragenden Daten als 1:1-Kopie auf dem Datenbus liegen, da jedes Datum entweder direkt von der Verarbeitungseinheit auf den Bus getrieben beziehungsweise von ihr in der vorliegenden Form verarbeitet wird. Bei sensitiven Daten wie zum Beispiel einem geheimen Schlüssel für kryptographische Funktionen ergibt sich daraus das Problem, dass die geheimen Daten in größeren Schaltungsteilen gehalten werden müssen. Oftmals geben Algorithmen darüber hinaus die Reihenfolge vor, in der die Daten an einzelne Adressen geschrieben werden müssen. Diese Reihenfolge muss dann von der Verarbeitungseinheit genau eingehalten werden. Die genannten Merkmale erlauben es, durch die Beobachtung des Bussystems, durch die Beobachtung der internen Register der Verarbeitungseinheit (CPU) oder durch andere Verfahren die vertraulichen Daten auszuforschen.

Die US 5, 892,826 offenbart ein Verfahren zur Übertragung von Daten wobei Speicherzellen einer Speichereinheit mindestens zwei verschiedene logische Adressen zugeordnet sind und übertragene Daten in Abhängigkeit der für die Speicherzelle verwendeten logischen Adresse veränderbar sind. Weiterhin offenbart die US 5,095,525 einen Computer-Speicher, der derart transformierbar ist, dass ein zu sendendes Datenwort umwandelbar ist und zu einer transformierten Adresse übermittelt wird. Ferner beschreibt die EP 1 093 056 A1 ein Verfahren zum Verschlüsseln von Daten. Aus der US 5, 933,854 ist ein System aus einer Speicherkarte und einem Computer bekannt, wobei verschlüsselte Daten ausgetauscht werden. Schließlich offenbart die US 5,239,634 ein Verfahren zum Einreihen von Daten in einer Warteschleife.

Das vorgeschlagene Verfahren dient der Übertragung von Daten über einen Datenbus, der sich zwischen einer Verarbeitungseinheit und einer Speichereinheit mit mehreren Speicherzellen befindet. Wie oben erläutert wurde, ist die Bezeichnung "Speichereinheit" dabei breit zu verstehen und soll auch Ein-/Ausgabe-Einheiten umfassen, welche unter bestimmten Adressen Daten entgegennehmen beziehungsweise bereitstellen. Bei dem Verfahren wird von der Verarbeitungseinheit über einen Adressbus die logische Adresse einer Speicherzelle der Speichereinheit übermittelt, auf welche ein Zugriff zum Lesen oder Schreiben erfolgen soll. Das Verfahren ist dadurch gekennzeichnet, dass mindestens einer der Speicherzellen der Speichereinheit, vorzugsweise jedoch allen Speicherzellen der Speichereinheit mindestens zwei verschiedene logische Adressen zugeordnet sind. Dieselbe Speicherzelle kann demnach über mindestens zwei verschiedene an den Adressbus angelegte Adressen adressiert werden. Weiterhin ist das Verfahren dadurch gekennzeichnet, dass die Daten bei ihrer Übertragung zwischen der Speicherzelle und dem Datenbus in Abhängigkeit von der zur Adressierung der Speicherzelle verwendeten logischen Adresse verändert werden.

Bei dem geschilderten Verfahren kann somit die Verarbeitungseinheit wahlweise über verschiedene logische Adressen auf dieselbe Speicherzelle zugreifen. Je nach verwendeter logischer Adresse werden dann innerhalb der Speichereinheit die aus der Speicherzelle gelesenen beziehungsweise die in die Speicherzelle zu schreibenden Daten verschiedenartig manipuliert. Die Manipulation beziehungsweise Veränderung sorgt dafür, dass die am Datenbus anliegenden Daten nicht mehr identisch mit den in der Speicherzelle vorliegenden beziehungsweise von der Verarbeitungseinheit verarbeiteten Daten sind. Auf dem Datenbus liegt somit nicht mehr eine 1:1-Kopie dieser Daten, was sicherheitsrelevante beziehungsweise vertrauliche Daten bei ihrer Übertragung vor einer erfolgreichen Ausforschung schützt.

Die Veränderung eines Datums, die bei seiner Übertragung zwischen einer Speicherzelle und dem Datenbus stattfindet, kann zum Beispiel darin bestehen, dass nicht alle Bits des D atums übertragen werden. Das heißt, dass das Datum nur eine geringere Anzahl von "Nutzbits" enthält, die die eigentliche Information tragen. Den nicht verwendeten Datenleitungen des Datenbusses können dann andere Daten aufgeprägt werden, weiche entweder zusätzliche Information übertragen oder aber nur der Verschleierung des relevanten Dateninhaltes dienen.

Andere mögliche Veränderungen eines Datums bei seiner Übertragung zwischen der Speicherzelle und dem Datenbus können wie folgt aussehen:
a) exklusiv-oder Verknüpfungen (XOR) mit den Adressbits;
b) exklusiv-oder Verknüpfungen (XOR) mit Bits der Speicherzelle;
c) exklusiv-oder Verknüpfungen (XOR) mit festen Werten;
d) Permutation der Datenbits untereinander;
e) Ersetzen von einzelnen Datenbits durch einzelne Adressbits;
f) Ersetzen von einzelnen Datenbits durch feste Werte.

Anwendung kryptografischer Verfahren auf die Datenbits in Abhängigkeit
von den Adreßbits vorzugsweise mit symmetrischen Algorithmen wie DES oder cipher block chaining (CBC).

Neben den aufgezählten Möglichkeiten gibt es noch zahlreiche weitere Möglichkeiten, die Daten für ihre Übertragung über den Datenbus zu verschleiern. Wichtig ist dabei nur, dass die Veränderung an den relevanten Bits der Daten von der Verarbeitungseinheit wieder eindeutig rückgängig gemacht werden kann, so dass keine Information verloren geht.

Gemäß einer Weiterbildung des Verfahrens wird die Art der Abhängigkeit zwischen der logischen Adresse einer Speicherzelle und der Veränderung der Daten nach jedem Zugriff auf die Speichereinheit und/oder die Speicherzelle verändert. Insbesondere kann dies durch einen Zufallsgenerator gesteuert geschehen, wobei sicherzustellen ist, dass in der Speichereinheit und in der Verarbeitungseinheit derselbe Zufallsgenerator betrieben wird, damit an beiden Enden des Busses eindeutig verfolgt werden kann, welche Art der Datenverschleierung aktuell angewendet wird

Die Erfindung betrifft ferner ein Datenübertragungssystem enthaltend eine Verarbeitungseinheit und eine Speichereinheit mit Speicherzellen, wobei die Verarbeitungseinheit und die Speichereinheit über einen Adressbus und einen Datenbus miteinander gekoppelt sind. Wie oben erläutert wurde, ist der Ausdruck "Speichereinheit" in einem breiten Sinne zu verstehen und umfasst alle Systeme, welche unter bestimmten Adressen Daten entgegennehmen oder bereitstellen. Das Datenübertragungssystem ist dadurch gekennzeichnet, dass die Speichereinheit mindestens eine mit dem Adressbus, mit mindestens einer Speicherzelle und mit dem Datenbus gekoppelte Datenveränderungseinheit enthält, welche die Daten bei ihrer Übertragung zwischen der Speicherzelle und dem Datenbus in Abhängigkeit von der am Adressbus anliegenden logischen Adresse der Speicherzelle verändert, wobei mindestens eine der Speicherzellen mindestens zwei verschiedene logische Adressen aufweist.

Mit einem derartigen Datenübertragungssystem kann grundsätzlich ein Verfahren der oben erläuterten Art durchgeführt werden. Vorzugsweise ist das Datenübertragungssystem so weitergebildet, dass es auch die Varianten des oben erläuterten Verfahren durchführen kann. Ein derartiges Datenübertragungssystem bietet eine hohe Sicherheit gegenüber dem Ausforschen vertraulicher Daten, da auf dem Datenbus nicht identische Kopien der relevanten Daten vorliegen, sondern nur veränderte Daten, wobei die Veränderungen ohne die Kenntnis des dabei verwendeten Algorithmus extern nicht rückgängig gemacht werden können.

### Kurze Beschreibung der Zeichnungen

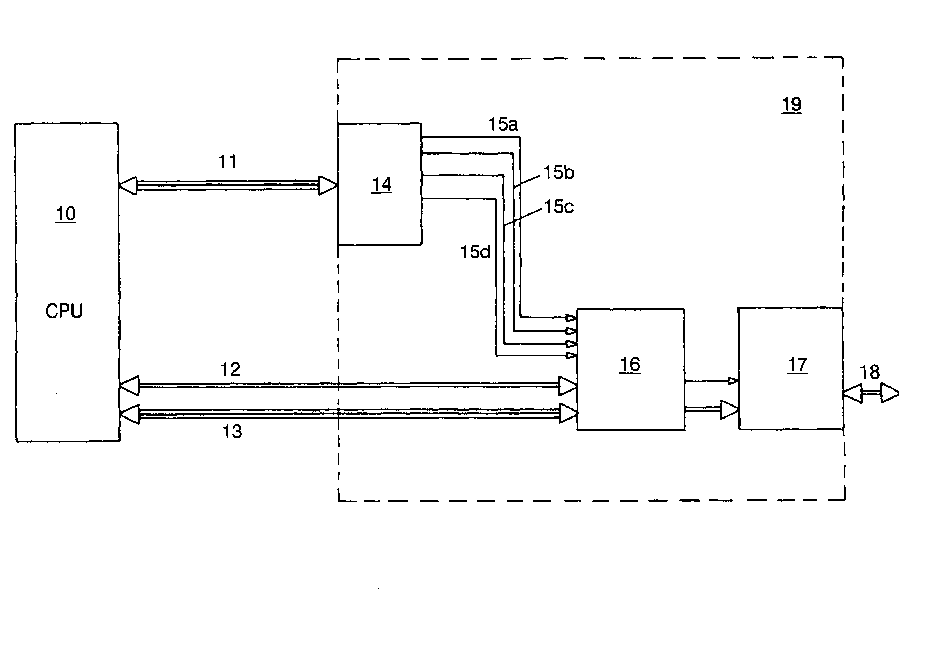

Im Folgenden wird die Erfindung mit Hilfe der Figur beispielhaft erläutert. Die einzige Abbildung zeigt schematisch die Komponenten eines erfindungsgemäßen Datenübertragungssystems und deren Kopplung durch verschiedene Busse.

### Bester Weg zur Ausführung der Erfindung

Die Hauptbestandteile des Datenübertragungssystems sind die Verarbeitungseinheit 10, bei der es sich vorliegend um eine CPU handeln soll, sowie die Speichereinheit 19 mit Speicherzellen 17. Die Speicherzelle 17 kann ein Speicherplatz in einem RAM, einem ROM, einem EEPROM, einem Ein-/Ausgaberegister oder dergleichen sein. Im Falle eines Registers ist die Speicherzelle 17 über eine Leitung 18 noch mit anderen Schaltungsteilen verbunden, die den Inhalt des Registers verwenden beziehungsweise verändern.

Die Verarbeitungseinheit 10 und die Speichereinheit 19 sind über ein Bussystem gekoppelt, welches aus dem Adressbus 11, dem Datenbus 13 und dem Steuerbus 12 besteht. An den Adressbus 11 kann die Verarbeitungseinheit 10 die logische Adresse derjenigen Speicherzelle 17 anlegen, zu der sie Daten schreiben möchte beziehungsweise von der sie Daten lesen möchte.

Die am Adressbus aktuell anliegende Adresse wird von einem Adressdecoder 14 in der Speichereinheit 19 decodiert. Beim Stand der Technik ist der Speicherzelle 17 dabei genau eine logische Adresse zugeordnet, unter welcher sie angesprochen werden kann. Dies ist bei dem erfindungsgsmäßen System anders. Hierbei kann die Speicherzelle 17 über verschiedene Adress-Auswahlsignale 15a, 15b, 15c, 15d ("Alias-Adressen") adressiert werden. Weiterhinist im Unterschied zum Stand der Technik eine kombinatorische Logik beziehungsweise Datenveränderungseinheit 16 in der Speichereinheit 19 vorgesehen, welche einerseits mit dem Adressdecoder 14, dem Steuerbus 12 und dem Datenbus 13 und andererseits mit der Speicherzelle 17 verbunden ist.

Die Datenveränderungseinheit 16 stellt eine Verbindung zwischen der adressierten Speicherzelle 17 und dem Datenbus 13 her, wobei sie die vom Datenbus 13 auf die Speicherzelle 17 beziehungsweise umgekehrt zu übertragenden Daten jedoch nicht einfach unverändert als identische Kopien durchlässt. Vielmehr führt die Datenveränderungseinheit 16 an den Daten Manipulationen durch, wobei die Art der Manipulation von der logischen Adresse bzw. dem Auswahlsignal 15a - d abhängt, worunter die Speicherzelle 17 angesprochen wurde. Dabei können insbesondere die folgenden Modifikationen der Daten implementiert werden:
1. Je nach auf dem Adressbus liegender logischer Adresse werden nur einige Bits der Speicherzelle 17 geschrieben/gelesen. Dasheißt, es können neben den eigentlichen Nutzbits auf den ungenutzten anderen Leitungen des Datenbusses 13 weitere Daten übertragen werden.
2. Je nach auf dem Adressbus 11 liegender logischer Adresse werden die Daten auf ihrem Weg zwischen Datenbus 13 und Speicherzelle 17 manipuliert. Das heißt, beim Schreiben kommen in der Speicherzelle 17 andere Daten an, als auf dem Datenbus 13 waren, und entsprechend umgekehrt beim Lesen.

Mögliche Manipulationen sind zum Beispiel
a) exklusiv-oder Verknüpfungen (XOR) mit den Adressbits;
b) exklusiv-oder Verknüpfungen (XOR) mit Bits der Speicherzelle;
c) exklusiv-oder Verknüpfungen (XOR) mit festen Werten;
d) Permutation der Datenbits untereinander;
e) Ersetzen von einzelnen Datenbits durch einzelne Adressbits;
f) Ersetzen von einzelnen Datenbits durch feste Werte.
g) Anwendung kryptografischer Verfahren auf die Datenbits in Abhängigkeit von den Adreßbits vorzugsweise mit symmetrischen Algorithmen wie DES oder cipher block chaining (CBC).

Insgesamt ergibt sich somit eine Vielzahl von Möglichkeiten, einen gewünschten Wert in die Speicherzelle mit den Adressen 15a - dunter Verwendung verschiedener Daten zu schreiben beziehungsweise von dort zu lesen. Diese Möglichkeiten können zusätzlich bei jedem zeitlich aufeinanderfolgenden Zugriff variiert werden, wobei diese Variation zum Beispiel durch einen Zufallsgenerator gesteuert werden kann.

Durch die Nutzung des in der Figur dargestellten Bussystems in Systemen, die geheime Daten bearbeiten, kann erreicht werden, dass die CPU 10 bei der Kommunikation mit Speichern oder Ein-/Ausgabe-Komponenten nicht mit den geheimen Daten selbst arbeiten muss, sondern auf diese nur über die oben beschriebenen Veischleierungsmaßnahmen zugreift. Trotz einer fest vorgegebenen Reihenfolge der Zieladressen ist es dabei möglich, durch die redundanten logischen Adressen die tatsächliche Zugriffsreihenfolge auf die Zieladressen zu variieren. Hierdurch werden alle Attacken erheblich erschwert, die auf die Ausforschung der geheimen Daten abzielen. Hierzu gehört zum Beispiel die Beobachtung des Bussystems, die Beobachtung der internen Register der CPU 10 oder auch Versuche, aus der Stromaufnahme des Systems Rückschlüsse auf die bearbeiteten Daten zu ziehen (Stichwort: DPA).

### Bezugszeichen:

- 10: Verarbeitungseinheit (CPU)
- 11: Adressbus
- 12: Steuerbus
- 13: Datenbus
- 14: Adressdecoder
- 15a-d: Adressauswahlsignale
- 16: Datenveränderungseinheit
- 17: Speicherzelle
- 18: Leitung
- 19: Speichereinheit

## Patentansprüche

1. Verfahren zur Übertragung von Daten über einen Datenbus (13) zwischen einer Verarbeitungseinheit (10) und einer Speichereinheit (19) mit mehreren Speicherzellen (17), wobei die Verarbeitungseinheit über einen Adressbus (11) die logische Adresse einer Speicherzelle (17) übermittelt, auf welche zugegriffen werden soll,
**dadurch gekennzeichnet,**
**dass** mindestens einer der Speicherzelle (17) mindestens zwei verschiedene logische Adressen zugeordnet sind, und dass die Daten bei ihrer Übertragung zwischen der Speicherzelle und dem Datenbus (13) in Abhängigkeit von der für die Speicherzelle verwendeten logischen Adresse verändert werden.

2. Verfahren nach Anspruch 1,
**dadurch gekennzeichnet,**
**dass** die Veränderung eines Datums darin besteht, dass nicht alle seiner Bits übertragen werden.

3. Verfahren nach einem der Ansprüche 1 oder 2,
**dadurch gekennzeichnet,**
**dass** die Veränderung eines Datums erfolgt durch
a) exklusiv-oder Verknüpfungen (XOR) mit den Adressbits;
b) exklusiv-oder Verknüpfungen (XOR) mit Bits der Speicherzelle;
c) exklusiv-oder Verknüpfungen (XOR) mit festen Werten;
d) Permutation der Datenbits untereinander;
e) Ersetzen von einzelnen Datenbits durch einzelne Adressbits;
f) Ersetzen von einzelnen Datenbits durch feste Werte;
g) Anwendung kryptografischer Verfahren auf die Datenbits in Abhängigkeit von den Adreßbits vorzugsweise mit symmetrischen Algorithmen wie DES oder cipher block chaining (CBC).

4. Verfahren nach mindestens einem der Ansprüche 1 bis 3,
**dadurch gekennzeichnet,**
**dass** die Art der Abhängigkeit zwischen der logischen Adresse einer Speicherzelle (17) und der Veränderung der Daten nach jedem Zugriff auf die Speichereinheit (19) und/oder Speicherzelle (17) verändert wird.

5. Datenübertragungssystem enthaltend eine Verarbeitungseinheit (10) und eine Speichereinheit (19) mit Speicherzellen (17), wobei die Verarbeitungseinheit und die Speichereinheit über einen Adressbus (11) und einen Datenbus (13) miteinander gekoppelt sind,
**dadurch gekennzeichnet,**
**dass** die Speichereinheit mindestens eine mit dem Adressbus, mit mindestens einer Speicherzelle (17) und mit dem Datenbus gekoppelte Datenveränderungseinheit (16) enthält, welche die Daten bei ihrer Übertragung zwischen der Speicherzelle (17) und dem Datenbus in Abhängigkeit von der am Adressbus anliegenden logischen Adresse für die Speicherzelle verändert, wobei mindestens eine der Speicherzellen mindestens zwei verschiedene logische Adressen aufweist.

6. Datenübertragungssystem nach Anspruch 5,
**dadurch gekennzeichnet,**
**dass** die Datenveränderungseinheit (16) so eingerichtet ist, dass sie ein Verfahren nach einem der Ansprüche 1 bis 4 durchführen kann.

## Claims

1. A method for transferring data over a data bus (13) between a processing unit (10) and a memory unit (19) comprising a plurality of memory cells (17), the processing unit sending the logic addresses of a memory cell (17) over an address bus (11), which memory cell is to be accessed, **characterized in that** at least two different logic addresses are assigned to at least one of the memory cells (17) and **in that** the data are changed in dependence on the logic address used for the memory cell during their transfer between the memory cell and the data bus (13).

2. A method as claimed in claim 1, **characterized in that** the change of a data consists **in that** not all of its bits are transferred.

3. A method as claimed in claim 1 or 2, **characterized in that** a data is changed by
a) exclusive-OR combinations (XOR) with the address bits;
b) exclusive-OR combinations (XOR) with bits of the memory cell;
c) exclusive-OR combinations (XOR) with fixed values;
d) permutation of the data bits;
e) replacing individual data bits by individual address bits;
f) replacing individual data bits by fixed values;
g) use of cryptographic methods for the data bits in dependence on the address bits, preferably with symmetrical algorithms such as DES or cipher block chaining (CBC).

4. A method as claimed in any one of claims 1 to 3, **characterized in that** the kind of dependence between the logic address of a memory cell (17) and the change of data is changed after every access to the memory unit (19) and/or the memory cell (17).

5. A data transfer system comprising a processing unit (10) and a memory unit (19) with memory cells (17), which processing unit and memory unit are coupled together via an address bus (11) and a data bus (13), **characterized in that** the memory unit comprises at least a data change unit (16) coupled to the address bus, to at least one memory cell (17) and to the data bus, which data change unit (16) changes the data during their transfer between the memory cell (17) and the data bus in dependence on the logic address of the memory cell present at the address bus, while at least one of the memory cells comprises at least two different logic addresses.

6. A data transfer system as claimed in claim 5, **characterized in that** the data change unit (16) is adapted in such a way that it can perform a method as claimed in any one of claims 1 to 4.

## Revendications

1. Procédé de transfert de données via un bus de données (13) entre une unité de traitement (10) et une unité de mémoire (19) comprenant plusieurs cellules de mémoire (17), l'unité de traitement transmettant via un bus d'adresse (11) l'adresse logique d'une cellule de mémoire (17) à laquelle on doit accéder,
**caractérisé en ce**
**qu'**au moins deux adresses logiques différentes sont attribuées à au moins une des cellules de mémoire (17), et en ce que les données sont modifiées lors de leur transfert entre la cellule de mémoire et le bus de données (13) en fonction de l'adresse logique utilisée pour la cellule de mémoire.

2. Procédé selon la revendication 1,
**caractérisé en ce**
**que** la modification d'une donnée consiste à ne pas transférer tous ses bits.

3. Procédé selon l'une quelconque des revendications 1 ou 2,
**caractérisé en ce**
**qu'**une donnée est modifiée par
a) des combinaisons OU exclusif (XOR) avec les bits d'adresse ;
b) des combinaisons OU exclusif (XOR) avec les bits de la cellule de mémoire ;
c) des combinaisons OU exclusif (XOR) avec des valeurs fixes ;
d) permutation réciproque des bits de données ;
e) remplacement des bits de données individuels par des bits d'adresse individuels ;
f) remplacement des bits de données individuels par des valeurs fixes ;
g) application de procédés cryptographiques aux bits de données en fonction des bits d'adresse de préférence avec des algorithmes symétriques tels que DES ou cipher block chaining (CBC).

4. Procédé selon au moins l'une quelconque des revendications 1 à 3,
**caractérisé en ce**
**que** le type de dépendance entre l'adresse logique d'une cellule de mémoire (17) et la modification des données est modifié après chaque accès à l'unité de mémoire (19) et/ou à la cellule de mémoire (17).

5. Système de transfert de données comprenant une unité de traitement (10) et une unité de mémoire (19) constituée de cellules de mémoire (17), l'unité de traitement et l'unité de mémoire étant couplées l'une à l'autre par l'intermédiaire d'un bus d'adresse (11) et d'un bus de données (13),
**caractérisé en ce**
**que** l'unité de mémoire comprend au moins une unité de modification de données (16) couplée au bus d'adresse, à au moins une cellule de mémoire (17) et au bus de données, laquelle unité de modification de données modifie les données lors de leur transfert entre la cellule de mémoire (17) et le bus de données en fonction de l'adresse logique présente au bus d'adresse pour la cellule de mémoire, au moins une des cellules de mémoire comportant au moins deux adresses logiques différentes.

6. Système de transfert de données selon la revendication 5,
**caractérisé en ce**
**que** l'unité de modification de données (16) est conçue pour pouvoir mettre en oeuvre un procédé selon l'une quelconque des revendications 1 à 4.
